# EUROPÄISCHE PATENTANMELDUNG

(11) **EP 4 775 863 A2**
(43) Veröffentlichungstag der Anmeldung: **15.07.2026**
(21) Anmeldenummer: 26181834.8
(22) Anmeldetag: 28.10.2022
(51) Int. Cl.: F16L 3/10

(54) **ABDECKELEMENT FÜR EINE ROHRSCHELLE UND SYSTEM ZUR DACHENTWÄSSERUNG VON GEBÄUDEN**

(30) Priorität: 04.11.2021 DE 202021106049 U
(62) Teilanmeldung aus: 22204329.1
(71) Anmelder: Lemp GmbH & Co. KG, 47441 Moers (DE)
(72) Erfinder: Lutter, Ulrich, 57329 Schmallenberg (DE); Drendel, Ralf, 47229 Duisburg (DE); Angerer, Martin, 66130 Saarbrücken (DE); Reimann, Jörg, 42929 Wermelskirchen (DE)
(74) Vertreter: Brinkmann & Partner

(57) **Zusammenfassung**

Die Erfindung betrifft ein Abdeckelement für eine Rohrschelle (10) zur Befestigung eines Fallrohres (9) an einem Gebäude (1), mit einem Körper, der einen flächigen Steg (31) und zwei sich daran anschließende, sich in gleiche Richtung vom Steg (31) erstreckende Schenkel (32) aufweist, wobei Steg (31) und Schenkel (32) einen Raum (33) aufspannen, der der Aufnahme einer Ringschiene (12) der Rohrschelle (10) derart dient, dass zumindest die Außenfläche (13) der Ringschiene (12) vollständig und die Seitenflächen (14) der Ringschiene (12) zumindest teilweise abgedeckt sind und der Körper zumindest an seiner der Ringschiene (12) abgewandten Seite hinsichtlich des Materials, der Struktur und/oder der Farbgestaltung an eine äußere Gestaltung des Fallrohrs (9) angepasst ist oder mit diesem bzw. dieser übereinstimmt, wobei der Körper zwei Abdeckhälften (24, 25) aufweist, die über ein elastisches Element (26) verbunden sind, wobei dieses elastische Element (26) im Querschnitt halbkreisförmig ausgebildet ist und sich über einen Außenflächenbereich des Abdeckelementes nach außen erstreckt

## Beschreibung

Die Erfindung betrifft ein System zur Dachentwässerung von Gebäuden, bestehend aus zumindest einer Rinne und einem Fallrohr, wobei das Fallrohr mit einer Rohrschelle am Gebäude befestigbar ist, wobei die Rohrschelle als im Wesentlichen ringförmiges oder polygonales Element mit einer im Querschnitt polygonalen Ringschiene ausgebildet ist und die Ringschiene eine Außenfläche und sich zwei daran anschließende Seitenflächen sowie eine Anlagefläche aufweist. Die Erfindung betrifft ferner ein Abdeckelement für eine Rohrschelle zur Befestigung eines Fallrohres an einem Gebäude.

Aus dem Stand der Technik ist es bekannt, dass Gebäudedächer zur Entwässerung von Niederschlagswasser mit Systemen ausgerüstet sind, die aus einer Rinne und zumindest einem Fallrohr bestehen, wobei das Fallrohr an die Rinne angeschlossen und mit Rohrschellen an der Gebäudeaußenfläche befestigt ist. Es sind auch Systeme bekannt, bei denen lediglich Fallrohre zur Entwässerung von Flachdächern vorgesehen sind. In diesem Fall wird das abzuführende Wasser beispielsweise in Rinnen gesammelt, die in die Dachfläche integriert sind.

Das Wasser wird über das Fallrohr einer Kanalisation oder aber auch einem Auffangbecken zugeführt. Die Befestigung der Rinnen im Dachbereich erfolgt mit Rinnenhaltern, während das Fallrohr mit Rohrschellen an der Gebäudeaußenwand befestigt ist. In Abhängigkeit der Gebäudehöhe sind eine Vielzahl von Rohrschellen notwendig, die in der Gebäudeaußenwand beispielsweise mit jeweils einer Schraube oder einem Einschlagstift verankert sind. In Abhängigkeit der Länge der Rinnen können auch mehrere Fallrohre mit einer Rinne in Verbindung stehen.

Jede Rohrschelle dient dazu, das Fallrohr passend zu dessen Kontur mechanisch in Position zu halten, wobei es hier auf den richtigen Abstand zur Gebäudewand ankommt, so dass ein gerader Verlauf des Fallrohres sichergestellt ist, der sowohl technisch als auch optisch von Vorteil ist. Die Rohrschellen werden aus Werkstoffen mit hoher Tragfähigkeit hergestellt. Ist die Tragfähigkeit der Werkstoffe eingeschränkt, so werden Werkstoffe mit großen Wandstärken verwendet, um die Tragfähigkeit zu gewährleisten. Rohrschellen werden häufig aus kostengünstigem Stahlblech hergestellt und weisen in Umfangsrichtung Versteifungssicken auf, die der notwendigen mechanischen Stabilität dienen. Verwendet wird oftmals dünnwandiges Stahlblech, welches im Außenbereich des Gebäudes Witterungseinflüssen ausgesetzt ist und somit zu Korrosion oder sonstigen farblichen Veränderungen neigt.

Darüber hinaus werden auch die Rinnen und Fallrohre aus einem entsprechenden Material hergestellt. Die Bestandteile des Systems sind aber unterschiedlichen Witterungseinflüssen ausgesetzt, da beispielsweise die Fallrohre und auch die Rohrschellen oftmals unter einem Dachüberstand angeordnet und somit geschützter sind, als die Rinnen im Traufenbereich eines Daches. Hieraus ergeben sich unterschiedliche Alterungseffekte der Oberflächen mit starken optischen Abweichungen. Dies gilt insbesondere auch dann. wenn unterschiedliche Materialien verwendet werden, woraus ein unterschiedliches und damit insbesondere auch ein optisch nachteiliges Korrosionsverhalten resultieren kann.

Aus der DE 20 2014 000 265 U1 ist eine Rohrschelle für die Anordnung eines Fallrohres an ein Gebäude bekannt. Diese Rohrschelle weist einen Wandmontageabschnitt zur Anbringung der Rohrschelle an der Wand sowie zwei mit dem Wandmontageabschnitt monolithisch einstückig zusammenhängenden und von dem Wandmontageabschnitt abstehende bogenförmige Klemmschenkel auf, die zusammen mit dem Wandmontageabschnitt einen C-förmigen Umgriff für das zu befestigende Rohr mit einem Umschlingungswinkel von mehr als 180° bilden und zur Aufnahme des Rohres in die Rohrschelle unter Vergrößerung des Abstandes zwischen ihren vom Wandmontageabschnitt entfernten Enden elastisch nachgiebig auseinanderspreizbar sind. Ein bogenförmiger Schließbügel zur Überbrückung des Abstandes zwischen den vom Wandmontageabschnitt entfernten Enden der Klemmschenkel ist vorgesehen, wobei die Klemmschenkel an ihren vom Wandmontageabschnitt zu den davon entfernten Klemmschenkelenden verlaufenden Außenrändern zum Rohrschelleninneren hin abgekantet sind, so dass sie eine im Querschnitt U-förmige Aufnahme bilden. In der Rohrschelle innenseitig ist ein ringsegmentförmig gebogenes, bandförmiges Andruckelement aus einem gummiartigen oder elastomeren Material aufgenommen oder einlegbar, so dass es über die Abkantungen hinweg rohrschelleninnenseitig absteht.

Diese vorbekannte Rohrschelle ist in an sich bekannter Ausgestaltung ausgebildet und weist ergänzend Andruckelemente auf, die zwischen Rohrschelle und Fallrohr zum Schutz der Außenfläche des Fallrohres angeordnet sind. Diese Andruckelemente können des Weiteren als Schalldämmelemente dienen, so dass die Übertragung des Schalls vom Fallrohr auf die Rohrschelle und umgekehrt verringert ist. Auch dienen die Andruckelemente zum Toleranzausgleich zwischen Rohr und Rohrschelle.

Ausgehend von diesem Stand der Technik liegt der Erfindung die **Aufgabe** zugrunde, ein gattungsgemäßes System derart weiterzubilden, dass die Rohrschelle in einfacher Weise gegen Witterungseinflüsse geschützt und gleichzeitig optisch an das Gebäude bzw. andere Gebäudebestandteile, wie Fallrohr, Rinne oder dgl. angepasst werden kann.

Des Weiteren liegt der Erfindung die **Aufgabe** zugrunde, ein gattungsgemäßes Abdeckelement für eine Rohrschelle bereitzustellen, die eine optische Anpassung der Rohrschelle an das Gebäude in einfacher Weise ermöglicht, wobei auch eine Anordnung an bereits verbauten Rohrschellen in einfacher Weise möglich sein soll.

Zur **Lösung** der Aufgabenstellung ist bei einem erfindungsgemäßen System vorgesehen, dass ein Abdeckelement derart mit der Ringschiene verbunden ist, dass zumindest die Außenfläche der Ringschiene vollständig und die Seitenflächen der Ringschiene zumindest teilweise abgedeckt sind und dass das Abdeckelement hinsichtlich des Materials, der Struktur und/oder der Farbgestaltung an eine äußere Gestaltung des Fallrohres und/oder der Rinne angepasst ist oder mit diesen bzw. dieser übereinstimmt.

Das System wird dadurch vorteilhaft weitergebildet, dass die Ringschiene aus zwei Teilen ausgebildet ist, die an jeweils einem Ende über ein Gelenk miteinander verbunden sind und an deren jeweils zweiten Enden ein Flansch mit einer Bohrung zur Aufnahme eines Verbinders, beispielsweise eines Schraubbolzens angeordnet ist, wobei sich das Abdeckelement auch über den Flansch erstreckt und das Gelenk außenseitig abdeckt. Die zweiteilige Ausgestaltung mit dem Gelenk hat den Vorteil, dass die Rohrschelle in einfacher Weise mit dem Fallrohr verbindbar ist. In einem ersten Schritt wird im Übrigen die mit dem Abdeckelement versehene Rohrschelle an der Gebäudeaußenwand befestigt. Hierzu wird eine Schrauben-Dübel-Kombination verwendet, wobei ein Dübel in eine zuvor in die Hauswand eingebrachte Bohrung eingesetzt und anschließend die Schraube in die Bohrung eingeschraubt wird, wobei die Schraube eine korrespondierende Öffnung in der Ringschiene durchgreift. Alternativ kann auch ein Einschlagstift Verwendung finden. Nachdem die Rohrschelle fest mit dem Gebäude verbunden ist wird das Fallrohr in die geöffnete Ringschiene eingesetzt und anschließend die Ringschiene geschlossen und mittels des Verbinders im Bereich der Flansche wird die Ringschiene am Fallrohr gesichert. Alternativ kann in einfacher Weise das Abdeckelement nach der Montage des Fallrohres aufgesteckt werden.

Eine vereinfache Montage ergibt sich beispielsweise auch dadurch, dass das Abdeckelement zweiteilig ausgebildet ist, so dass es in einfacher Weise nach einer Befestigung der Rohrschelle am Gebäude aufgesetzt werden kann.

Abdeckelement und Ringschiene sind vorzugsweise form- und/oder reibschlüssig miteinander verbunden. Eine formschlüssige Verbindung wird beispielsweise dadurch erzielt, dass das Abdeckelement im Querschnitt U-förmig ausgebildet ist, wobei ein Aufnahmeraum zwischen zwei Schenkeln und einem die Schenkel verbindenden Steg ausgebildet ist, der der Aufnahme der Ringschiene dient. Ist dieser Aufnahmeraum geringfügig kleiner, als die Außendimension der Ringschiene, so kann das Abdeckelement klemmend aufgesetzt werden, woraus sich eine ergänzend reibschlüssige Verbindung ergibt. Das Abdeckelement ist somit vorzugsweise im Querschnitt U-förmig ausgebildet und übergreift die Ringschiene klemmend.

Nach einem weiteren Merkmal der Erfindung ist vorgesehen, dass die Ringschiene eine Sicke und das Abdeckelement eine die Sicke aufnehmenden Aufnahmebereich aufweist. Die Sicke dient als Versteifungselement der Ringschiene, so dass die Ringschiene auch mit einer geringeren Materialstärke ausgebildet sein kann. Hierdurch werden die Herstellkosten der Ringschiene deutlich reduziert. Das Abdeckelement weist einen die Sicke aufnehmenden Aufnahmebereich auf. Dies kann beispielsweise derart ausgebildet sein, dass auch das Abdeckelement eine entsprechende Sicke zeigt. Es besteht aber auch die Möglichkeit, dass der Aufnahmebereich als Nut in dem Abdeckelement ausgebildet ist, wobei die Nut vorzugsweise eine Querschnittsform aufweist, die mit der Außenkontur der Sicke übereinstimmt, so dass die Sicke möglichst spielfrei in der Nut angeordnet ist.

Ergänzend kann das Abdeckelement Sicken zur Aussteifung aufweisen. Diese Sicken können beispielsweise im Bereich des Übergangs aus dem das Ringelement abdeckenden Bereich in den Flanschbereich angeordnet seien, so dass hier die Gefahr des Abbrechens des den Flanschbereich überdeckenden Bereichs des Abdeckelements reduziert ist. Dies ist insbesondere von Vorteil, wenn das Abdeckelement aus Kunststoff ausgebildet ist und klemmend auf die Ringschiene aufzusetzen ist, wobei auch eine klemmende Montage auf einem Flansch vorgesehen ist.

Seitens des erfindungsgemäßen Abdeckelementes ist zur **Lösung** der voranstehend genannten Aufgabe vorgesehen, dass das Abdeckelement einen Körper aufweist, der einen flächigen Steg und zwei sich daran anschließende, sich in gleiche Richtung vom Steg erstreckende Schenkel aufweist, wobei Steg und Schenkel einen Raum aufspannen, der der Aufnahme einer Ringschiene der Rohrschelle derart dient, dass zumindest die Außenfläche der Ringschiene vollständig und die Seitenflächen der Ringschiene zumindest teilweise abgedeckt sind und der Körper zumindest in an seiner der Ringschiene abgewandten Seite hinsichtlich des Materials, der Struktur und/oder der Farbegestaltung an eine äußere Gestaltung des Fallrohrs angepasst ist oder mit diesem bzw. dieser übereinstimmt.

Ein erfindungsgemäßes Abdeckelement kann in einfacher Weise und kostengünstig hergestellt werden und dient zum einen dazu, eine Rohrschelle im Bereich eines Fallrohres gegen Umwelteinflüsse zu schützen und zum anderen die Rohrschelle in ihrem äußeren Erscheinungsbild an Gegebenheiten des Gebäudes und/oder Teilen des Gebäudes einzupassen.

Der Körper des Abdeckelementes ist zweiteilig ausgebildet und hat den Vorteil, dass der Körper des Abdeckelementes auch bei einer höheren Steifigkeit in einfacher Weise an der Rohrschelle montierbar ist. Die Teile, es kann sich um Abdeckhälften des Abdeckelements handeln, des Körpers können durch ein flexibles Gelenkelement verbunden sein, so dass die Teile einteilig ausgebildet sein können und eine vorteilhafte Steifigkeit aufweisen, während die Montage über das flexible Gelenkelement vereinfacht ist. Diese Ausgestaltung hat auch den Vorteil, dass dem Verarbeiter lediglich ein Bauteil an die Hand gegeben wird, welches an der Rohrschelle montierbar ist. In beiden Fällen ist die Montage des Abdeckelementes auch bei bereits verbauten Rohrschellen möglich, so dass das Abdeckelement auch bei bereits verbauten Rohrschellen und montierten Fallrohren nachträglich im Zuge einer Nachrüstung möglich ist.

Vorzugsweise ist der Körper des Abdeckelements im Querschnitt U-förmig ausgebildet. Der Körper weist somit einen Steg und zwei sich dran rechtwinklig in gleicher Richtung ausgerichtente Schenkel auf. Durch diese Ausgestaltung kann der Körper des Abdeckelements über die Rohrschelle gestülpt werden, wobei eine form- und/oder reibschlüssige Verbindung zwischen Abdeckelement und Rohrschelle ausgebildet wird, die einen guten Sitz des Abdeckelementes an der Rohrschelle ermöglicht. Ergänzend kann auch ein Verbindungselement, beispielsweise ein Kleber zwischen Rohrschelle und Abdeckelement verwendet werden.

Der Körper besteht vorzugsweise aus einem biegeelastischen Metall oder Kunststoff bzw. einem biegeelastischen Material aus Metall und Kunststoff. Kunststoff hat den Vorteil, dass es in einfacher Weise passgenau verarbeitet werden kann. Metall wiederum hat den Vorteil, dass es dauerhaft stabil und geringer witterungsempfindlich ist. Beide Materialien sind in einfacher Weise an optische Anforderungen anpassbar.

Vorzugsweise weist der Körper einen Aufnahmebereich für eine Sicke oder einen Vorsprung der Rohrschelle auf. Hierbei kann vorgesehen sein, dass der Aufnahmebereich lediglich die Sicke oder einen Vorsprung aufnimmt, ohne dass diese Sicke oder dieser Vorsprung von außen erkennbar ist. Alternativ kann vorgesehen sein, dass der Aufnahmebereich entsprechend der Kontur der Sicke oder des Vorsprungs ebenfalls im Körper des Abdeckelements ausgebildet ist, so dass sich eine kongruente Ausgestaltung des Aufnahmebereichs und der Sicke ergibt, die die Sicke im Bereich des Körpers erkennbar macht.

Weiterhin ist vorgesehen, dass der Körper ringförmig ausgebildet ist und dass der Körper eine, zwei Enden bildende Unterbrechung aufweist, wobei jedes Ende einen Flansch aufweist, die über ein Verbindungselement miteinander und den Körper schließend verbindbar sind. Bei dieser Ausgestaltung kann in einfacher Weise das Abdeckelement über die Rohrschelle gelegt werden, bevor anschließend das Abdeckelement durch ein Verbindungselement welches beide Flansche durchdringt, verbunden wird. Das Abdeckelement wird somit unverlierbar an der Rohrschelle befestigt. Es sind auch andere geometrische Formen des Körpers, abweichend von einer Ringform, möglich, wie beispielsweise eine rechteckige, insbesondere quadratische Form.

Insbesondere im Bereich des Übergangs des Körpers in die Flansche weist der Körper Sicken zur Aussteifung auf, so dass die Gefahr der Beschädigung des Abdeckelementes bei der Montage insbesondere im Flanschbereich verringert ist.

Weitere Merkmale und Vorteile der Erfindung ergeben sich aus der nachfolgenden Beschreibung der zugehörigen Zeichnung. In der Zeichnung zeigen
- Fig. 1: ein Gebäude mit einem erfindungsgemäßen System;
- Fig.2: eine Rohrschelle des Systems gemäß Fig. 1 in perspektivischer Ansicht;
- Fig. 3: ein Abdeckelement des Systems in perspektivischer Ansicht;
- Fig. 4: das Abdeckelement gemäß Fig. 3 in einer weiteren perspektivischen Ansicht;
- Fig. 5: die Rohrschelle und das Abdeckelement in einer Seitenansicht;
- Fig. 6: die Rohrschelle und das Abdeckelement gemäß Fig. 5 in einer perspektivischen Ansicht;
- Fig. 7: die Rohrschelle und das Abdeckelement gemäß den Figuren 5 und 6 in einer weiteren perspektivischen Ansicht;
- Fig. 8: die Rohrschelle und das Abdeckelement gemäß den Figuren 5 bis 7 in einer weiteren perspektivischen Ansicht; und
- Fig. 9: das Abdeckelement gemäß den Figuren 3 bis 8 in einer aufgeklappten Stellung.

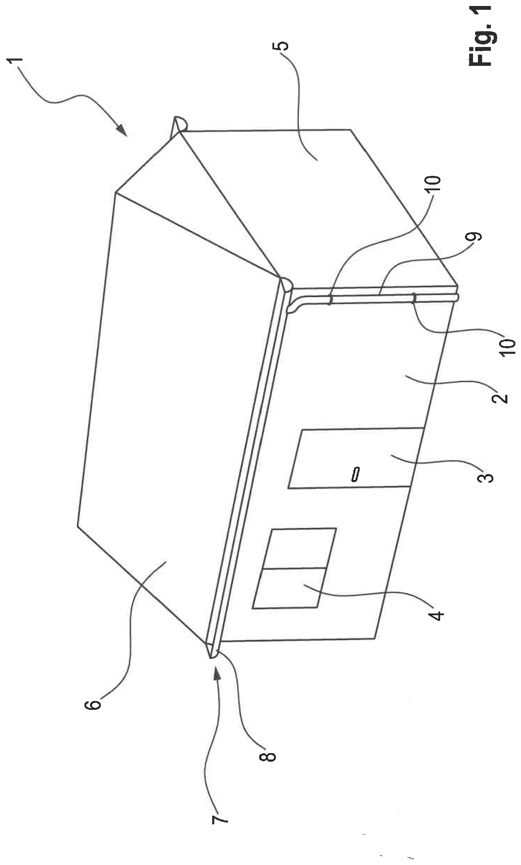

Fig. 1 zeigt ein Gebäude 1 in perspektivischer Ansicht bestehend aus einer Vorderwand 2 mit einer Tür 3 und einem Fenster 4 und einer Seitenwand 5. Nicht dargestellt sind eine Rückwand und eine zweite Seitenwand, die zusammen mit der Vorderwand 2 und der Seitenwand 5 eine Gebäudehülle bilden, auf die ein Satteldach 6 aufgesetzt ist.

Im Bereich des Übergangs vom Satteldach 6 zur Vorderwand 2 ist ein System 7 zur Dachentwässerung des Gebäudes 1 angeordnet. Das System 7 besteht aus einer Rinne 8, die sich über die gesamte Länge des Satteldachs 6 im Traufenbereich erstreckt und das vom Satteldach 6 ablaufende Niederschlagswasser aufnimmt. Die Rinne 8 ist über nicht näher dargestellte Rinnenhalter am Satteldach 6 im Traufenbereich befestigt.

In einem Eckbereich der Vorderwand 2 zur Seitenwand 5 ist ein Fallrohr 9 am Gebäude 1 befestigt, wobei das Fallrohr 9 mit seinem oberen Ende in einer komplementären Öffnung der Rinne 8 und mit seinem unteren Ende im Bodenbereich, insbesondere in einem Abwasserkanal angeordnet ist. Das Fallrohr 9 ist mit Rohrschellen 10 an der Vorderwand 2 befestigt.

Das in der Figur 1 dargestellte System 7 befindet sich in übereinstimmender Ausgestaltung auch im Traufenbereich des Satteldachs 6 auf der nicht näher dargestellten Rückseite des Gebäudes 1. Ergänzend können mehrere Fallrohre 9 an die Rinne 8 angeschlossen sein. Die Rinne 8, die im dargestellten Ausführungsbeispiel nach Fig. 1 im Querschnitt halbkreisförmig ausgebildet ist, kann auch alternative Querschnittsformen haben, wie beispielsweise eine polygonale Querschnittsform.

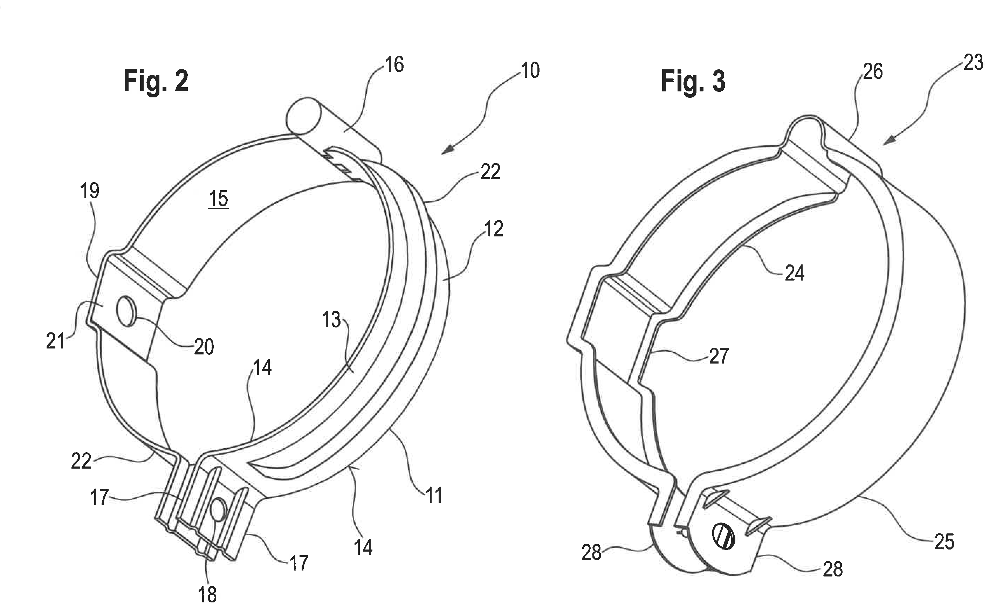

In Fig. 2 ist eine Rohrschelle 10 in perspektivischer Ansicht dargestellt. Die Rohrschelle 10 ist als im Wesentlichen ringförmiges Element 11 ausgebildet. Das Element 11 weist eine im Querschnitt rechteckige Ringschiene 12 auf, die eine Außenfläche 13, zwei daran sich anschließende Seitenflächen 14 und eine Anlagefläche 15 aufweist. Die Ringschiene 12 ist in zwei Hälften unterteilt, die über ein Gelenk 16 verbunden sind. Jede Hälfte der Ringschiene 12 weist an ihrem dem Gelenk 16 abgewandten Ende einen Flansch 17 auf, wobei jeder Flansch 17 eine Öffnung 18 zur Aufnahme eines nicht näher dargestellten Verbindungselementes aufweist, wobei diese Öffnungen 18 koaxial zueinander ausgerichtet sind. Als Verbindungselement kann hier beispielsweise ein Schraubbolzen mit Mutter vorgesehen sein.

Ergänzend weist eine Hälfte der Ringschiene 12 eine im Querschnitt U-förmige Abbiegung 19 auf, die wiederum eine Öffnung 20 zur Aufnahme eines Befestigungselementes, beispielsweise einer in einen nicht näher dargestellten Dübel einzuschraubenden Schraube hat. Die Abbiegung 19 weist eine Anlagefläche 21 auf, die der Anlage an der Vorderwand 2 des Gebäudes dient. Die durch die Öffnung 20 greifende Schraube dient der Befestigung der Rohrschelle 10 am Gebäude 1, so dass das in die Rohrschelle 10 aufgenommene Fallrohr 9 lagegenau am Gebäude 1 fixiert ist. Eine weitere Ausgestaltung sieht vor, dass an der Rohrschelle 10 in diesem Bereich ein Gewinde, beispielsweise einer eingesetzten Mutter, angeordnet ist, welches mit einer Gewindestange, beispielsweise einer Schraube zusammenwirkt. Hierüber kann auch die Distanz zur Wand eingestellt werden.

Ergänzend ist aus Fig. 2 zu erkennen, dass beide Hälften der Ringschiene 12 im Bereich der Außenfläche 13 eine Sicke 22 haben, die der Aussteifung der Ringschiene 12 dienen und die sich über einen wesentlichen Teil der Ringschiene 12 zwischen einem Flansch 17 und dem Gelenk 16 erstrecken.

Die Ringschiene 12 kann beispielsweise aus einem verzinkten Stahlblech ausgebildet sein.

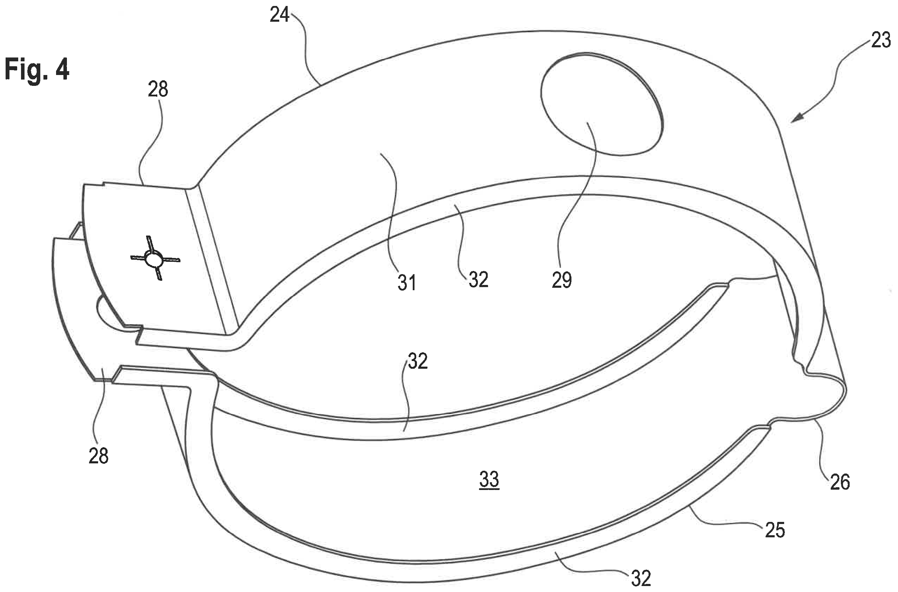

In den Figuren 3 und 4 ist ein Abdeckelement 23 dargestellt, das derart mit der Ringschiene 12 verbindbar ist, dass zumindest die Außenfläche 13 der Ringschiene 12 vollständig und die Seitenflächen 14 der Ringschiene 12 zumindest teilweise abgedeckt sind. Das Abdeckelement 23 weist zwei Abdeckhälften 24, 25 auf, die über ein elastisches Element 26 verbunden sind, wobei dieses elastische Element 26 im Querschnitt halbkreisförmig ausgebildet ist und sich über einen Außenflächenbereich des Abdeckelementes 23 nach außen erstreckt. Das elastische Element 26 ist derart ausgebildet, dass in den inneren Bereich des Elements 26 das Gelenk 16 aufgenommen werden kann.

Beide Abdeckhälften 24, 25 sind im Querschnitt U-förmig ausgebildet, wobei die Abdeckhälfte 24 gemäß Fig. 3 eine mit der Abbiegung 19 übereinstimmende Abbiegung 27 aufweist. Des Weiteren weisen beide Abdeckhälften 24, 25 an ihren freien Enden jeweils einen Flansch 28 auf. Jeder Flansch 28 ist mit einer zentrischen Öffnung zur Aufnahme des bereits voranstehend beschriebenen Verbindungselementes ausgebildet.

Im Unterschied zur Ausführungsform nach Fig. 3 weist die Ausführungsform nach Fig. 4 in der Abdeckhälfte 24 eine Bohrung 29 auf, die der Aufnahme der Schraube für die Verbindung der Rohrschelle 10 mit der Vorderwand 2 des Gebäudes 1 dient. Eine entsprechende Öffnung ist selbstverständlich auch in der Abbiegung 27 bei der Ausführungsform gemäß Fig. 3 vorgesehen.

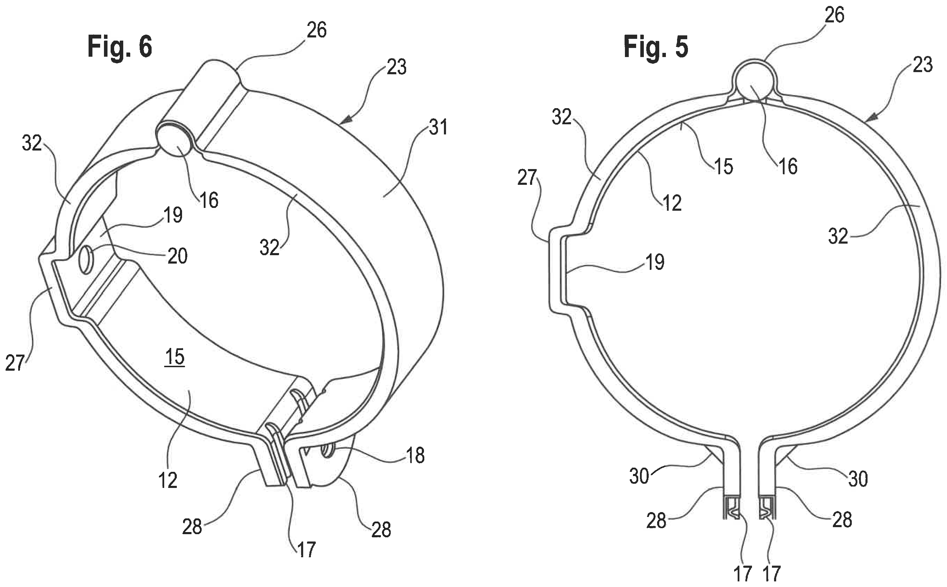

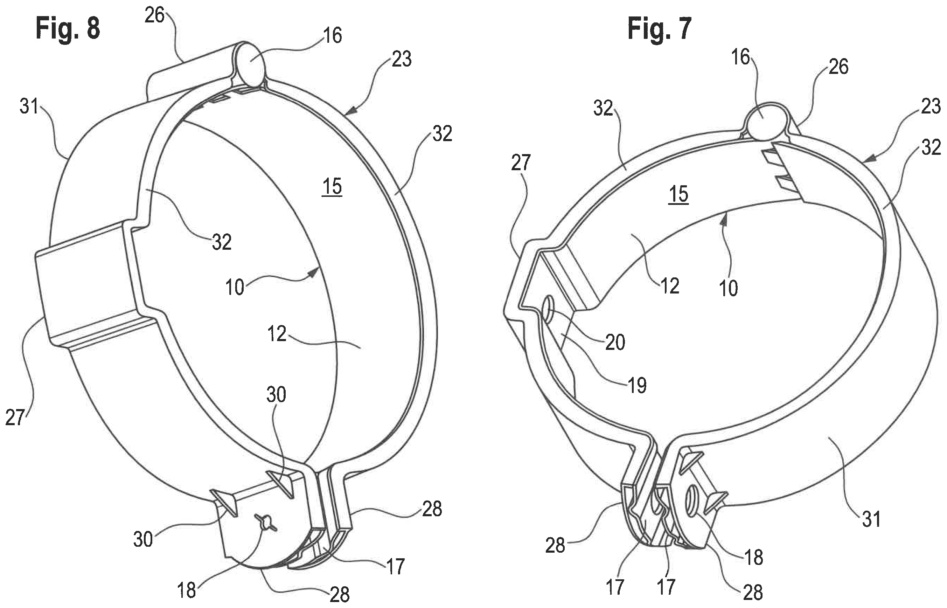

Die Figuren 5 bis 8 zeigen das Abdeckelement 23 in seiner an der Rohrschelle 10 bestimmungsgemäß vorgesehenen Montagelage in verschiedenen Ansichten. Ergänzend ist zum Beispiel in den Figuren 5 und 8 zu erkennen, dass das Abdeckelement 23 in dem Übergangsbereich von einer Abdeckhälfte 24 bzw. 25 in einen Flansch 28 Sicken 30 aufweist. Diese Sicken 30 dienen der Stabilisierung des Abdeckelements 23, welches beispielsweise aus einem Kunststoff hergestellt werden kann.

Das Abdeckelement 23 weist eine von der Rohrschelle 10 abweichende Farbgestaltung auf. Ergänzend besteht das Abdeckelement 23 aus einem vom Material der Rohrschelle 10 abweichenden Material und kann somit sowohl an eine äußere Gestaltung des Fallrohres 9 und/oder der Rinne 8 angepasst sein. Auch kann eine Anpassung an die Fassadengestaltung des Gebäudes 1 erfolgen, nämlich entweder dahingehend, dass übereinstimmende Farben gewählt werden oder dass auch Komplementärfarben oder Kontrastfarben verwendet werden, um bestimmte visuelle Effekte im Fassadenbereich zu erzielen. Neben diesen ästhetischen Funktionen weist das Abdeckelement 23 aber auch noch eine Schutzfunktion auf. Die Rohrschelle 10 wird im Außenbereich annähernd vollständig vom Abdeckelement 23 abgedeckt, so dass das Abdeckelement 23 die Rohrschelle 10 vor Umwelteinflüssen schützt und insbesondere Korrosionsschäden vermeidet oder zumindest abdeckt.

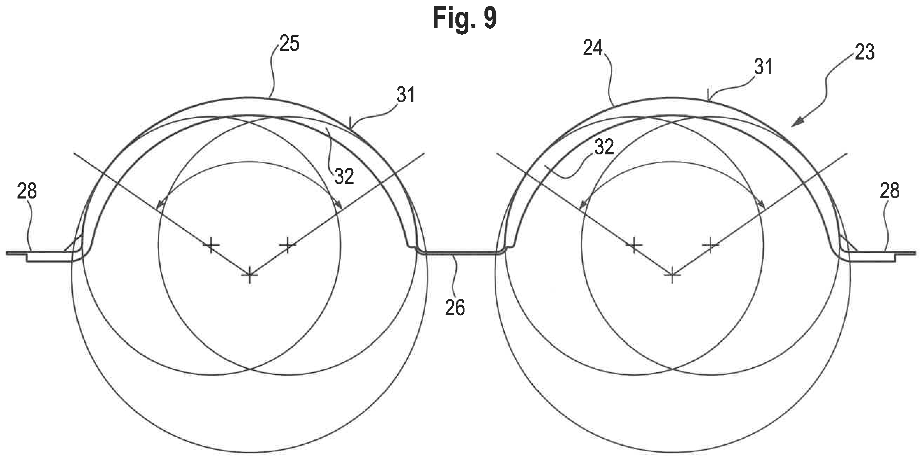

In Fig. 9 ist das Abdeckelement in einer Anordnung vor der Montage an einer Rohrschelle 10 dargestellt. Erkennbar ist, dass der flexible Bereich des Elements 26 eine Relativbewegung der beiden Abdeckhälften 24, 25 zueinander zulässt. Zu diesem Zweck weist das Abdeckelement 23 im Bereich des Elements 26 eine abweichende Querschnittsform auf. Die Querschnittsform im Bereich des Elements 26 ist polygonal, nämlich rechteckig. Durch die Ausgestaltung des Abdeckelements 23 aus einem biegeelastischen Material kann das Abdeckelement 23 aus seiner in Fig. 9 dargestellten Ausgangsstellung in einfacher Weise an die Rohrschelle 10 angepasst und anschließe3nd über das nicht näher dargestellte Verbindungselement im Bereich der Flansche 28 mit der Rohrschelle 10 verbunden werden.

Das Abdeckelement 23 übergreift die Rohrschelle 10 form- und reibschlüssig. Zu diesem Zweck weist das Abdeckelement 23 im Bereich der Abdeckhälften 24 und 25 einen flächigen Steg 31 und zwei sich daran anschließende, sich in gleiche Richtung vom Steg 31 erstreckende Schenkel 32 auf, die eine Raum 33 aufspannen, der der Aufnahme der Ringschiene 12 der Rohrschelle 10 derart dient, dass zumindest die Außenfläche 13 der Ringschiene 12 vollständig und die Seitenflächen 14 der Ringschiene 12 zumindest teilweise abgedeckt sind.

Rohrschelle 10 und Abdeckelement 27 können abweichend von der voranstehenden Beschreibung eine abweichende Form haben. Beispielsweise können die Elemente eine rechteckige, insbesondere quadratische Kontur aufweisen.

### Bezugszeichen

- 1.: Gebäude
- 2.: Vorderwand
- 3.: Tür
- 4.: Fenster
- 5.: Seitenwand
- 6.: Satteldach
- 7.: System
- 8.: Rinne
- 9.: Fallrohr
- 10.: Rohrschelle
- 11.: Element
- 12.: Ringschiene
- 13.: Außenfläche
- 14.: Seitenfläche
- 15.: Anlagefläche
- 16.: Gelenk
- 17.: Flansch
- 18.: Öffnung
- 19.: Abbiegung
- 20.: Öffnung
- 21.: Anlagefläche
- 22.: Sicke
- 23.: Abdeckelement
- 24.: Abdeckhälfte
- 25.: Abdeckhälfte
- 26.: Element
- 27.: Abbiegung
- 28.: Flansch
- 29.: Öffnung
- 30.: Sicke
- 31.: Steg
- 32.: Schenkel

- 33.: Raum

## Patentansprüche

1. Abdeckelement für eine Rohrschelle (10) zur Befestigung eines Fallrohres (9) an einem Gebäude (1), mit einem Körper, der einen flächigen Steg (31) und zwei sich daran anschließende, sich in gleiche Richtung vom Steg (31) erstreckende Schenkel (32) aufweist, wobei Steg (31) und Schenkel (32) einen Raum (33) aufspannen, der der Aufnahme einer Ringschiene (12) der Rohrschelle (10) derart dient, dass zumindest die Außenfläche (13) der Ringschiene (12) vollständig und die Seitenflächen (14) der Ringschiene (12) zumindest teilweise abgedeckt sind und der Körper zumindest an seiner der Ringschiene (12) abgewandten Seite hinsichtlich des Materials, der Struktur und/oder der Farbgestaltung an eine äußere Gestaltung des Fallrohrs (9) angepasst ist oder mit diesem bzw. dieser übereinstimmt, wobei der Körper zwei Abdeckhälften (24, 25) aufweist, die über ein elastisches Element (26) verbunden sind, wobei dieses elastische Element (26) im Querschnitt halbkreisförmig ausgebildet ist und sich über einen Außenflächenbereich des Abdeckelementes nach außen erstreckt.

2. Abdeckelement nach Anspruch 1,
**dadurch gekennzeichnet,**
**dass** der Körper im Querschnitt U-förmig ausgebildet ist.

3. Abdeckelement nach einem der Ansprüche 1 oder 2,
**dadurch gekennzeichnet,**
**dass** der Körper aus einem biegeelastischen Metall oder Kunststoff bzw. einem biegeelastischen Material aus Metall und Kunststoff ausgebildet ist.

4. Abdeckelement nach einem der Ansprüche 1 bis 4,
**dadurch gekennzeichnet,**
**dass** der Körper einen Aufnahmebereich für eine Sicke (22) oder einen Vorsprung der Rohrschelle (10) aufweist.

5. Abdeckelement nach einem der Ansprüche 1 bis 5,
**dadurch gekennzeichnet,**
**dass** der Körper ringförmig ausgebildet ist und dass der Körper eine, zwei Enden bildende Unterbrechung aufweist, wobei jedes Ende einen Flansch (28) aufweist, die über ein Verbindungselement miteinander und den Körper schließend verbindbar sind.

6. Abdeckelement nach einem der Ansprüche 1 bis 6,
**dadurch gekennzeichnet,**
**dass** der Körper Sicken (30) zur Aussteifung aufweist, die insbesondere im Bereich der Flansche (28) angeordnet sind.
